# EUROPÄISCHE PATENTSCHRIFT

(11) **EP 3 953 131 B1**
(45) Veröffentlichungstag und Bekanntmachung des Hinweises auf die Patenterteilung: **14.06.2023**
(21) Anmeldenummer: 19717268.7
(22) Anmeldetag: 08.04.2019
(51) Int. Cl.: B29C 33/12, B29C 33/18, B29C 33/30, B29C 43/36, B29C 43/18

(54) **VERFAHREN UND SYSTEM ZUM HERSTELLEN EINES ALS VERKLEIDUNG FÜR EIN FAHRZEUGINTERIEURBAUTEIL DIENENDEN ZUMINDEST ZWEISCHICHTIGEN VERBUNDS**
METHOD AND SYSTEM FOR PRODUCING AN AT LEAST TWO-LAYER COMPOSITE SERVING AS A LINING FOR A VEHICLE INTERIOR COMPONENT
PROCÉDÉ ET SYSTÈME DE PRODUCTION D'UN COMPOSITE À AU MOINS DEUX COUCHES SERVANT D'HABILLAGE POUR UNE PIÈCE D'INTÉRIEUR DE VÉHICULE

(43) Veröffentlichungstag der Anmeldung: 16.02.2022
(73) Patentinhaber: Lisa Dräxlmaier GmbH, 84137 Vilsbiburg (DE)
(72) Erfinder: THALHAMMER, Robert, 84155 Aich (DE)
(86) Internationale Anmeldenummer: PCT/EP2019/058767
(87) Internationale Veröffentlichungsnummer: WO 2020/207552

(56) Entgegenhaltungen:
- DE-A1- 19 842 092
- DE-A1-102013 208 841

## Beschreibung

### Technisches Gebiet

Die vorliegende Erfindung betrifft ein Verfahren und ein System zum Herstellen eines als Verkleidung für ein Fahrzeuginterieurbauteil dienenden zumindest zweischichtigen Verbunds.

### Stand der Technik

Die DE 198 42 092 C2 zeigt eine Vorrichtung zur Herstellung von Spritz- oder Pressteilen. Die formgebenden Teile des Werkzeugs werden mehrteilig ausgebildet, so dass durch Austausch, hinzufügen bzw. weglassen einzelner Werkzeugteile ein anderes Formteil herstellbar ist.

Die DE 10 2013 208 841 B4 zeigt ein Verfahren zum Herstellen eines Verbunds mit zumindest zwei Schichten zum Kaschieren eines Verkleidungsbauteils.

Ein derartiger Verbund kann beispielsweise bei Armaturentafeln, Mittelkonsolen, Fahrzeugtüren, Säulen und Dächern innenseitig als Verkleidung im Fahrzeuginnenraum angebracht werden. Dabei ist es üblich, dass eine die Sichtseite bildende Schicht eines solchen Verbunds oftmals aus einem hochwertig anmutenden Dekormaterial, wie beispielsweise aus Leder, hergestellt wird, wobei eine zweite darunterliegende Schicht für eine angenehme Haptik, insbesondere für eine sogenannte Soft-Touch-Haptik, sorgt. Bei der zweiten Schicht kann es sich beispielsweise um ein Abstandsgewirke handeln, welches für die besagte Haptik sorgt.

Insbesondere bei teuren Dekorschichten, z.B. aus hochwertigem Leder, ist es wünschenswert, dass nur ein geringer Verschnitt beim Herstellen solcher Verbünde auftritt. Zudem ist es bei solchen zumindest zweischichtigen Verbünden oftmals schwierig, die beiden Schichten passgenau übereinander anzuordnen und aneinander zu fixieren.

Ein derartiger Verbund kann beispielsweise bei Armaturentafeln, Mittelkonsolen, Fahrzeugtüren, Säulen und Dächern innenseitig als Verkleidung im Fahrzeuginneren aufgebracht werden.

### Beschreibung der Erfindung

Es ist daher die Aufgabe der vorliegenden Erfindung, eine Lösung bereitzustellen, mittels welcher ein als Verkleidung für ein Fahrzeuginterieurbauteil dienender, zumindest zweischichtiger Verbund besonders einfach und effizient hergestellt werden kann.

Diese Aufgabe wird durch ein Verfahren und ein System zum Herstellen eines als Verkleidung für ein Fahrzeuginterieurbauteil dienenden zumindest zweischichtigen Verbunds mit den Merkmalen der unabhängigen Patentansprüche gelöst. Weitere mögliche Ausgestaltungen der Erfindung sind in den abhängigen Ansprüchen angegeben.

Bei dem erfindungsgemäßen Verfahren zum Herstellen eines als Verkleidung für ein Fahrzeuginterieurbauteil dienenden zumindest zweischichtigen Verbunds wird eine erste Schablone mit einer Aussparung für eine erste Schicht des Verbunds bereitgestellt. Danach wird die erste Schicht in der Aussparung der ersten Schablone angeordnet. Anschließend wird ein mit einem Klebstoff versehendes Tablett auf der in der Aussparung angeordneten ersten Schicht und in der Aussparung der ersten Schablone angeordnet, in Folge dessen die erste Schicht am Tablett anhaftet.

Danach wird das Tablett mitsamt der daran anhaftenden ersten Schicht aus der Aussparung der ersten Schablone entnommen und ein Klebstoff wird auf einer vom Tablett abgewandten Seite der ersten Schicht aufgebracht. Des Weiteren wird eine zweite Schablone mit einer Aussparung für eine zweite Schicht des Verbunds bereitgestellt. In der Aussparung der zweiten Schablone wird die zweite Schicht angeordnet. Danach wird das Tablett mitsamt der daran anhaftenden und mit dem Klebstoff versehenen ersten Schicht auf der in der Aussparung der zweiten Schablone angeordneten zweiten Schicht und in der Aussparung der zweiten Schablone angeordnet.

In Folge dessen haftet die erste Schicht an der zweiten Schicht an. Durch die aufeinander abgestimmte Form der Aussparungen in den beiden Schablonen und der Kontur des Tabletts werden die beiden Schichten automatisch positionsgenau zueinander bzw. aneinander angeordnet. Anschließend wird das Tablett mitsamt dem aus den beiden Schichten hergestellten Verbund aus der zweiten Schablone entnommen.

Das Tablett und die Aussparungen sind also so geformt, dass das Tablett in die beiden Aussparungen hineinpasst. Die Aussparungen könne eine ähnliche Kontur aufweisen, können aber auch unterschiedliche geformt sein. Wesentlich ist, dass die Form des Tabletts und der Schablonen derart ist, dass es wiederholbar immer in derselben Relativposition zu den jeweiligen Schablonen in ihren Aussparungen angeordnet werden kann und nicht anders. Dadurch wird automatisch gewährleistet, dass die beiden Schichten nur in ihrer bestimmungsgemäßen Anordnung zueinander positioniert und miteinander verbunden werden können.

Bei der ersten Schicht kann es sich zum Beispiel um ein Abstandsgewirke oder einen Schaumstoff handeln, wobei es sich bei der zweiten Schicht beispielsweise um eine Dekorschicht aus Leder handeln kann. Andere Dekorschichten in Form der zweiten Schicht sind ebenfalls möglich. Die beiden Schichten werden so zurechtgeschnitten, dass diese in die jeweiligen Aussparungen der Schablonen passen. Durch die Verwendung der Schablonen mit ihren Aussparungen, deren Konturen an die Kontur des Tabletts angepasst sind, ergibt es sich zwangsläufig und auf einfache Weise, dass die beiden Schichten des Verbunds passgenau aufeinander bzw. übereinander angeordnet werden. Anders ausgedrückt ist es kaum möglich, die beiden Schichten nicht in ihrer bestimmungsgemäßen Anordnung aneinander bzw. übereinander anzuordnen, wenn das erfindungsgemäße Verfahren durchgeführt wird.

Eine aufwendige und gegebenenfalls schwierige Ausrichtung der Schichten zueinander kann entfallen. Insbesondere ist es bei dem erfindungsgemäßen Verfahren nicht erforderlich, eine oder beide Schichten nach dem Miteinanderverbinden nachträglich noch zu beschneiden. Stattdessen können die Schichten des zumindest zweischichtigen Verbunds im Vorfeld, also vor dem Einlegen in die jeweiligen Schablonen, angepasst an die Form der Aussparungen entsprechend zurechtgeschnitten und bereitgelegt werden. Danach müssen die jeweiligen Schichten einfach nur in den jeweiligen Aussparungen der Schablonen angeordnet werden.

Unter Zuhilfenahme des Tabletts ist es auf einfache Weise möglich, die erste Schicht aus der Aussparung der ersten Schablone zu entnehmen und nach der Beschichtung mit dem Klebstoff auf der zweiten Schicht anzuordnen, welche zuvor in der Aussparung der zweiten Schablone angeordnet worden ist. Das Handling des Tabletts kann beispielsweise mittels eines Roboters erfolgen, sodass die mit dem Handling des Tabletts verbundenen Schritte besonders einfach automatisiert werden können.

Insbesondere ist es mittels des erfindungsgemäßen Verfahrens möglich, die erste und die zweite Schicht so zueinander anzuordnen, dass beispielsweise die zweite Schicht - welche zum Beispiel aus Leder hergestellt sein kann - umlaufend oder zumindest an einigen Randbereichen die erste Schicht überragt und so Umbugbereiche bildet, welche dazu dienen, die zweite Schicht am betreffenden Fahrzeuginterieurbauteil zu befestigen. Die überstehenden Bereiche der zweiten Schicht können beispielsweise auch zum Teil dafür genutzt werden, die zweite Schicht an dem betreffenden Fahrzeuginterieurbauteil festzunähen.

Mittels des erfindungsgemäßen Verfahrens ist es unter Verwendung der besagten Schablonen und des Tabletts also auf besonders einfache und effiziente Weise möglich, einerseits die beiden Schichten des Verbunds passgenau zueinander anzuordnen und andererseits auch eine der Schichten mit einem gewissen Überstand im Vergleich zur anderen Schicht herzustellen und an dieser zu befestigen.

Eine mögliche Ausführungsform der Erfindung sieht vor, dass zumindest eine der Schablonen einen modularen Aufbau aus mehreren Segmentvarianten aufweist und angepasst an eine Form der betreffenden Schicht aus einer Auswahl der Segmentvarianten zusammengesetzt wird. Ändert sich beispielsweise der Zuschnitt von einer der Schichten, was im Zuge einer Vorserienentwicklung bis hin zu einer Serienentwicklung durchaus erfolgen kann, müssen nicht die gesamten Schablonen aufwendig neu angepasst werden. Stattdessen können einfach einige der Segmentvarianten ausgetauscht werden. Im Zuge eines Facelifts von Fahrzeugen kann es beispielsweise ebenfalls vorkommen, dass sich der Zuschnitt der Schichten ein wenig ändert. Auch in diesem Fall ist es nicht erforderlich, die gesamten Schablonen auszutauschen. Stattdessen können einfach einige der Segmentvarianten gegen andere Segmentvarianten ausgetauscht werden, sodass die Formgebung der Schablonen und insbesondere deren Aussparungen an den neuen Materialzuschnitt angepasst werden können. Insbesondere ist es möglich, dass die Segmentvarianten beispielsweise miteinander verschraubt werden. Dadurch lassen sich die Segmentvarianten ganz einfach wiederlösbar aneinander befestigen.

Erfindungsgemäß ist es vorgesehen, dass die Schablonen jeweilige Positionierelemente aufweisen, in welche das Tablett mit jeweiligen korrespondierenden Positionierelementen eingesetzt und dadurch in einer bestimmungsgemäßen Position gegenüber den Schablonen zentriert wird. Bei den Positionierelementen der Schablonen kann es sich beispielsweise um Vertiefungen, Vorsprünge, Ausbuchtungen oder dergleichen handeln, wobei die korrespondierenden Positionierelemente am Tablett entsprechend ausgeformt sind. Durch das Zusammenwirken der Positionierelemente der Schablonen und des Tabletts ist es beispielsweise für einen Werker oder auch für einen Roboter auf einfache Weise möglich, das Tablett positionsgenau in seiner bestimmungsgemäßen Anordnung innerhalb der Aussparungen der jeweiligen Schablonen zu positionieren. In Folge dessen wird auch eine positionsgenaue Anordnung der Schichten des Verbunds zueinander gewährleistet. Die Positionierelemente sind bei beiden Schablonen genau gleich angeordnet. Das heißt, dass die Positionierelemente sowohl bei der ersten als auch bei der zweiten Schablone gleich zueinander angeordnet und ausgerichtet sind. Dadurch kann sichergestellt werden, dass beim Einsetzen des Tabletts in die jeweiligen Aussparungen der Schablonen das Tablett immer gleich zu den Positionierelementen der jeweiligen Schablonen angeordnet wird. Die mittels des Tabletts aufgenommene erste Schicht wird dadurch immer gleich zur zweiten Schicht angeordnet, wenn das Tablett mitsamt der daran anhaftenden ersten Schicht in die Aussparung der zweiten Schablone eingesetzt wird, in welcher zuvor die zweite Schicht angeordnet wurde. Die Aussparungen können beispielsweise Anschläge aufweisen, sodass die erste Schicht bzw. die Schicht auch ganz einfach immer in derselben Position und Ausrichtung innerhalb der Aussparungen angeordnet werden können, indem die Schichten einfach an die Anschläge bewegt werden.

Eine weitere mögliche Ausführungsform der Erfindung sieht vor, dass das Tablett mit einem doppelseitigen Klebeband versehen wird, an welchem die erste Schicht anhaftet. Besagter Klebstoff am Tablett kann also mit anderen Worten ein doppelseitiges Klebeband sein. Dies kann besonders einfach am Tablett angebracht werden. Zudem kann das doppelseitige Klebeband mehrfach wiederverwendet werden, wobei die erste Schicht problemlos wieder von dem doppelseitigen Klebeband abgezogen werden kann. Das doppelseitige Klebeband kann beispielsweise die gleiche Kontur wie das Tablett aufweisen und dadurch eine Seite des Tabletts vollständig bedecken. Besagte Positionierelemente können dabei ausgelassen werden.

Gemäß einer weiteren möglichen Ausführungsform der Erfindung ist es vorgesehen, dass zumindest eine der Schablonen aus Polyoxymethylen hergestellt wird. Der Vorteil hierbei ist, dass Klebstoffe üblicherweise an diesem Material schlecht bis gar nicht anhaften.

Gemäß einer weiteren möglichen Ausführungsform der Erfindung ist es vorgesehen, dass das Tablett aus glasfaserverstärktem Kunststoff hergestellt wird. Der Vorteil bei glasfaserverstärktem Kunststoff ist insbesondere, dass dieser kein Schrumpfungsverhalten aufweist, insbesondere auch bei Temperaturwechseln. Somit kann beispielsweise verhindert werden, dass sich das Tablett während des Herstellverfahrens unter Hitzeeinwirkung ausdehnt und beim Abkühlen zusammenzieht, in Folge dessen die erste daran angeordnete Schicht entsprechend verformt werden könnte.

Eine weitere mögliche Ausführungsform der Erfindung sieht vor, dass als der Klebstoff ein Schmelzklebstoff auf der ersten Schicht aufgetragen wird. Der Auftrag des Schmelzklebstoffs kann beispielsweise durch einen Walzenauftrag mittels einer entsprechenden Vorrichtung erfolgen. Im Gegensatz zu beispielsweise einem Sprühauftrag kann so der Schmelzklebstoff besonders gezielt ausschließlich auf der ersten Schicht aufgetragen werden, ohne dass sich der Schmelzklebstoff anderweitig noch verteilt. Der Vorteil des Schmelzklebstoffs liegt darin, dass dieser relativ weich ist. Dadurch ergibt sich eine besonders gute Haptik bei dem aus den zumindest zwei Schichten hergestellten Verbund. Nach dem Auftragen des Schmelzklebstoffs kann die erste Schicht mitsamt dem Tablett einer sogenannten Flashstation zugeführt werden, mittels welcher die Schmelzklebstoff, z.B. mittels Infrarotstrahlung, leicht aufgeschmolzen und klebrig gemacht wird.

Eine weitere mögliche Ausführungsform der Erfindung sieht vor, dass die zweite Schicht mittels Unterdruck an die zweite Schablone angesaugt wird. Beispielsweise können in der Aussparung der zweiten Schablone mehrere Öffnungen vorgesehen sein, an denen ein Unterdruck angelegt werden kann. Dadurch kann die zweite Schicht, sobald diese einmal passgenau positioniert worden ist, innerhalb der Aussparung der zweiten Schablone fixiert gehalten werden. Dadurch kann insbesondere sichergestellt werden, dass die erste Schicht passgenau an der zweiten Schicht angeordnet und an dieser fixiert werden kann.

Gemäß einer weiteren möglichen Ausführungsform der Erfindung ist es vorgesehen, dass die zweite Schicht ein wenig kleiner als die Aussparung der zweiten Schablone zugeschnitten wird. Insbesondere wenn die zweite Schicht aus Leder hergestellt wurde, kann dadurch sichergestellt werden, dass die zweite Schicht keine Wellen oder andere Unregelmäßigkeiten aufweist, da die zweite Schicht in jedem Fall ein wenig kleiner als die Aussparung der zweiten Schablone ist. Dadurch kann die zweite Schicht besonders glatt in der Aussparung der zweiten Schablone angeordnet werden. Die zweite Schablone kann beispielsweise leicht geneigt angeordnet sein, sodass die zweite Schicht automatisch innerhalb der Aussparung der zweiten Schablone schwerkraftbedingt nach unten rutscht und in Anlage mit entsprechenden Anlageflächen innerhalb der Aussparung gelangt. Dadurch werden eine passgenaue Ausrichtung und Anordnung der zweiten Schicht innerhalb der Aussparung der zweiten Schablone für einen Werker erleichtert.

Gemäß einer weiteren möglichen Ausführungsform der Erfindung ist es vorgesehen, dass der Verbund nach der Entnahme aus der zweiten Schablone von dem Tablett entfernt wird und unter Druck- und Hitzeeinwirkung die Schichten irreversibel miteinander verbunden werden. Der Verbund kann beispielsweise mittels einer sogenannten Flachbett-Kaschiermaschine unter Druck- und Hitzeeinwirkung dauerhaft aneinanderhaftend ausgebildet werden. Dabei reagiert, insbesondere vernetzt, der zuvor auf die erste Schicht aufgetragene Klebstoff, sodass die beiden Schichten danach fest aneinander haften.

Eine weitere mögliche Ausführungsform der Erfindung sieht vor, dass nach der Hitzeeinwirkung die Schichten abgekühlt werden. Dies geschieht vorzugsweise innerhalb derselben Vorrichtung bzw. Maschine, mittels welcher die Schichten unter Druck- und Hitzeeinwirkung miteinander verbunden werden. In der besagten Vorrichtung bzw. Maschine kann dafür eine geeignete Kühlstrecke vorgesehen sein. Durch das Abkühlen wird ein nachträgliches Verrutschen der Schichten zueinander verhindert.

Das erfindungsgemäße System zum Herstellen eines als Verkleidung für ein Fahrzeuginterieurbauteil dienenden zumindest zweischichtigen Verbunds umfasst eine erste Schablone mit einer Aussparung für eine erste Schicht des Verbunds, ein Tablett und eine zweite Schablone, mit einer Aussparung für eine zweite Schicht des Verbunds, wobei die Schablonen und das Tablett so geformt sind, dass das Tablett jeweils nur in einer bestimmten Anordnung in die Aussparungen passt. Mögliche Ausgestaltungen des erfindungsgemäßen Verfahrens sind als mögliche Ausgestaltungen des erfindungsgemäßen Systems und umgekehrt anzusehen, wobei das System insbesondere Mittel zur Durchführung der Verfahrensschritte aufweist.

Weitere mögliche Vorteile, Merkmale und Ausgestaltungen der Erfindung sind in der nachfolgenden Figurenbeschreibung angegeben, wobei die vorstehend genannten Merkmale und Merkmalskombinationen sowie die nachfolgend in der Figurenbeschreibung und/oder in den Figuren alleine gezeigten Merkmale und Merkmalskombinationen nicht nur in der jeweils angegebenen Kombination, sondern auch in anderen Kombinationen oder in Alleinstellung verwendbar sind, ohne den Rahmen der Erfindung zu verlassen.

### Kurze Figurenbeschreibung

Die Zeichnung zeigt in:
- Fig. 1: eine Perspektivansicht einer ersten Schablone mit einer Aussparung für ein Abstandsgewirke;
- Fig. 2: eine weitere Perspektivansicht der ersten Schablone, wobei ein Abstandsgewirke teilweise in der Aussparung der ersten Schablone angeordnet worden ist;
- Fig. 3: eine weitere Perspektivansicht der ersten Schablone, wobei nach Einlegen des Abstandsgewirkes ein Tablett ebenfalls noch in die Aussparung eingelegt wurde;
- Fig. 4: eine Perspektivansicht einer Vorrichtung, in welche das Tablett mitsamt dem darin anhaftenden Abstandsgewirke angeordnet wurde, um das Abstandsgewirke mit einem Klebstoff zu versehen;
- Fig. 5: eine weitere Vorrichtung, mittels welcher durch Infrarotstrahlung der aufgebrachte Klebstoff aktiviert wird;
- Fig. 6: eine Perspektivansicht einer zweiten Schablone mit einer Aussparung für eine aus Leder hergestellte Dekorschicht;
- Fig. 7: eine weitere Perspektivansicht der zweiten Schablone, nachdem die aus Leder hergestellte Dekorschicht in die Aussparung der zweiten Schablone eingelegt wurde;
- Fig. 8: eine weitere Perspektivansicht der zweiten Schablone, wobei das Tablett mitsamt den daran anhaftenden Abstandsgewirke auf der aus Leder hergestellten Dekorschicht positioniert wurde;
- Fig. 9: eine weitere Perspektivansicht der zweiten Schablone während das Tablett mitsamt dem aus dem Abstandsgewirke und der Dekorschicht hergestellten Verbund entnommen wird;
- Fig. 10: einen Trennvorgang des Verbunds von dem Tablett;
- Fig. 11: eine Perspektivansicht einer Flachbett-Kaschiermaschine, mittels welcher zwei der Verbünde mit Druck und Hitze beaufschlagt werden; und in
- Fig. 12: eine Perspektivansicht einer weiteren möglichen Ausführungsform der ersten Schablone, wobei diese aus mehreren Segmenten zusammengesetzt ist.

In den Figuren sind gleiche oder funktionsgleiche Elemente mit den gleichen Bezugszeichen versehen worden.

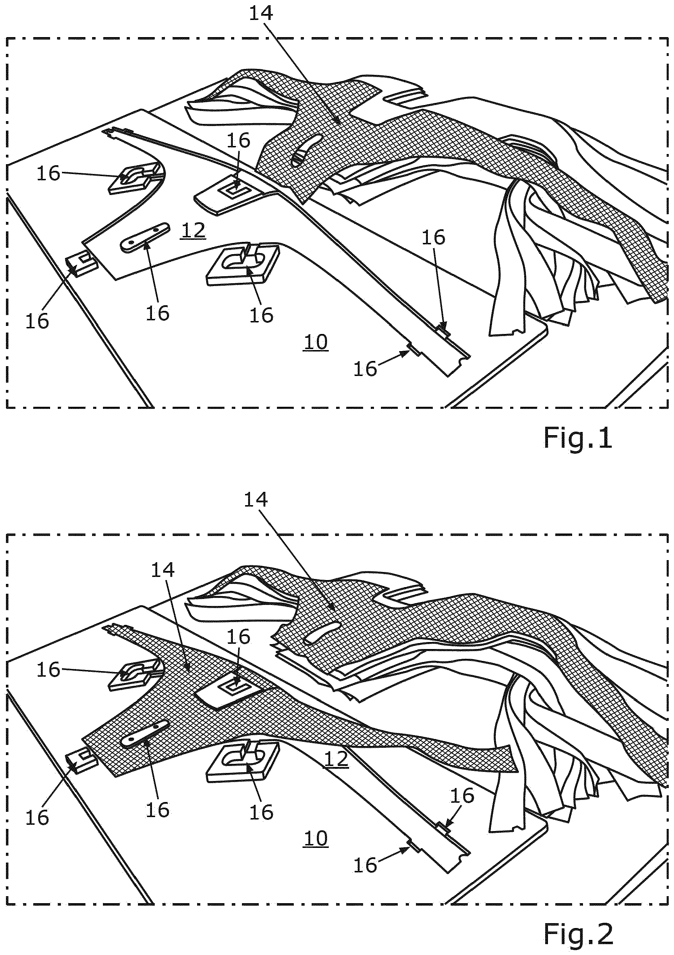

Eine erste Schablone 10 mit einer Aussparung 12 für ein Abstandsgewirke 14 ist in einer Perspektivansicht in Fig. 1 gezeigt. Das Abstandsgewirke 14 bildet eine erste Schicht eines Verbunds, welcher als Verkleidung für ein Fahrzeuginterieurbauteil dient. Die Form bzw. Kontur der Aussparung 12 entspricht dabei zumindest im Wesentlichen der Form bzw. Kontur des Abstandsgewirkes 14. Die Schablone 10 weist mehrere Positionierelemente 16 auf, deren Funktionsweise bzw. Zweck später noch genauer erläutert wird.

In Fig. 2 ist die erste Schablone 10 in einer weiteren Perspektivansicht gezeigt, und zwar während eines der Abstandsgewirke 14 gerade in die Aussparung 12 eingesetzt wird. Anhand der vorliegenden Darstellung kann man erkennen, dass das Abstandsgewirke 14 zumindest im Wesentlichen passgenau in die Aussparung 12 eingesetzt werden kann.

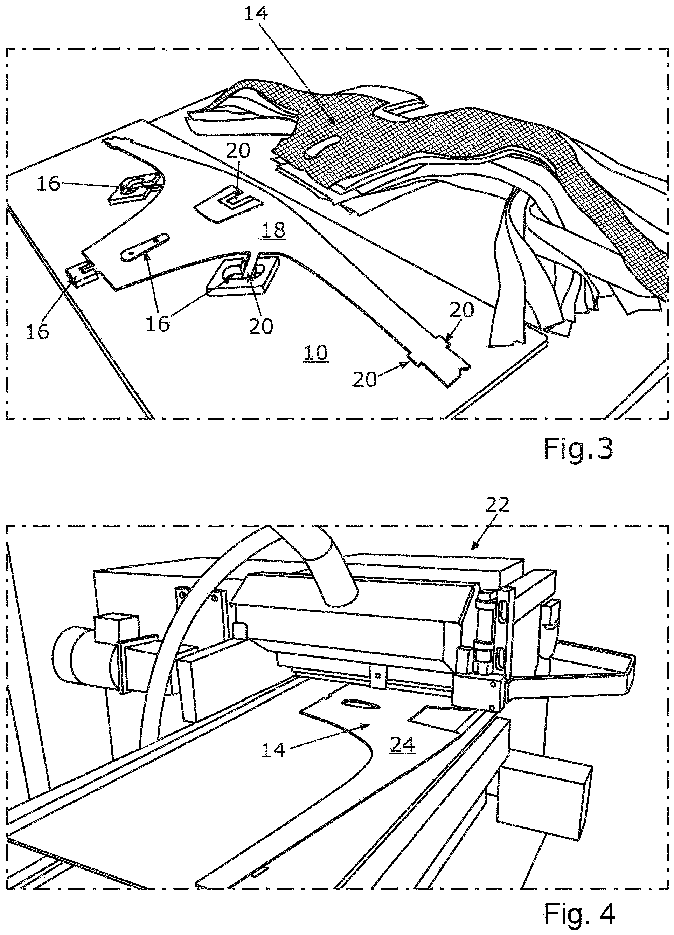

In Fig. 3 ist die erste Schablone 10 in einer weiteren Perspektivansicht gezeigt. Ein mit einem Klebstoff versehendes Tablett 18, welches eine ähnliche Kontur wie die Aussparung 12 der ersten Schablone 10 aufweist, wurde auf der in der Aussparung 12 angeordneten ersten Schicht, also auf dem Abstandsgewirke 14, angeordnet, in Folge dessen die hier nicht erkennbare Seite des Tabletts 18 an dem Abstandsgewirke 14 anhaftet, welches zuvor in der Aussparung 12 der ersten Schablone 10 angeordnet wurde.

Das Tablett 18 weist seinerseits jeweilige Positionierelemente 20 auf, welche mit den zuvor erwähnten Positionierelementen 16 der ersten Schablone 10 korrespondieren. Vorliegend sind die Positionierelemente 20 des Tabletts 18 in Form von Laschen ausgebildet, wobei die Positionierelemente 16 in Form von Aussparungen ausgebildet sind. Andere Formgebungen der Positionierelemente 20, 16 sind ebenfalls möglich. Wesentlich ist, dass die Positionierelemente 16, 20 so zusammenwirken, dass das Tablett 18 immer nur in derselben Relativposition zur Schablone 10 passgenau in die Aussparung 12 eingesetzt werden kann.

Das Tablett 18 wird nach dem Einsetzen in die Aussparung 12 der ersten Schablone 10 mitsamt dem daran anhaftenden Abstandsgewirke 14 aus der Aussparung 12 der ersten Schablone 10 entnommen und einer in Fig. 4 dargestellten Vorrichtung 22 zugeführt. Mittels dieser Vorrichtung 22 wird ein nicht näher bezeichneter Klebstoff, insbesondere ein Schmelzklebstoff, auf einer vom Tablett 18 abgewandten Seite 24 des Abstandsgewirkes 14 durch einen Walzenauftrag aufgetragen. Durch den Walzenauftrag kann sichergestellt werden, dass der Schmelzklebstoff flächig und homogen auf der von dem Tablett 18 abgewandten Seite 24 des Abstandgewirkes 14 aufgetragen wird, und zwar ohne dass der Schmelzklebstoff - wie beispielsweise bei einem Sprühauftrag - noch in ungünstiger Weise innerhalb einer Produktionsstätte verteilt wird.

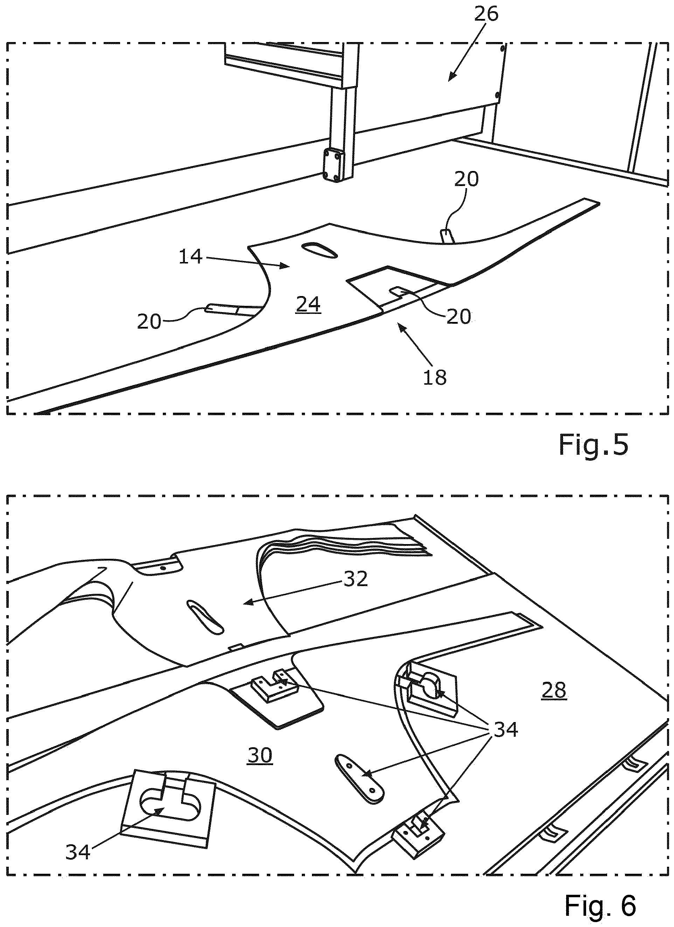

Nach dem Klebstoffauftrag wird zur Aktivierung des Klebstoffs das Abstandsgewirke 14 einer weiteren Vorrichtung 26, beispielsweise einer sogenannten Flash-Station, zugeführt, wie in Fig. 5 zu erkennen. Mittels der Vorrichtung 26 wird der Klebstoff mittels Infrarotstrahlung aktiviert. Währenddessen haftet das Abstandsgewirke 14 weiterhin an dem Tablett 18 an.

In Fig. 6 ist eine zweite Schablone 28 in einer Perspektivansicht gezeigt. Die zweite Schablone 28 weist ihrerseits eine Aussparung 30 auf, welche zum Aufnehmen einer aus Leder hergestellten Dekorschicht 32 dient. Wie die erste Schablone 10 umfasst die zweite Schablone 28 ihrerseits mehrere Positionierelemente 34, welche genauso angeordnet sind wie die Positionierelemente 16 bei der ersten Schablone 10. Die Aussparung 12 der ersten Schablone 10 und die Aussparung 30 der zweiten Schablone 28 weisen die gleiche Kontur bzw. gleiche Form auf.

Die Dekorschichten 32 sind von ihrem Zuschnitt her ein wenig kleiner zugeschnitten als die Aussparung 30 der zweiten Schablone 28. Zudem ist die zweite Schablone 28 leicht geneigt angeordnet, sodass beim Einsetzen bzw. Anordnen der jeweiligen Dekorschichten 32 diese schwerkraftbedingt automatisch in ihre bestimmungsgemäße Position rutschen.

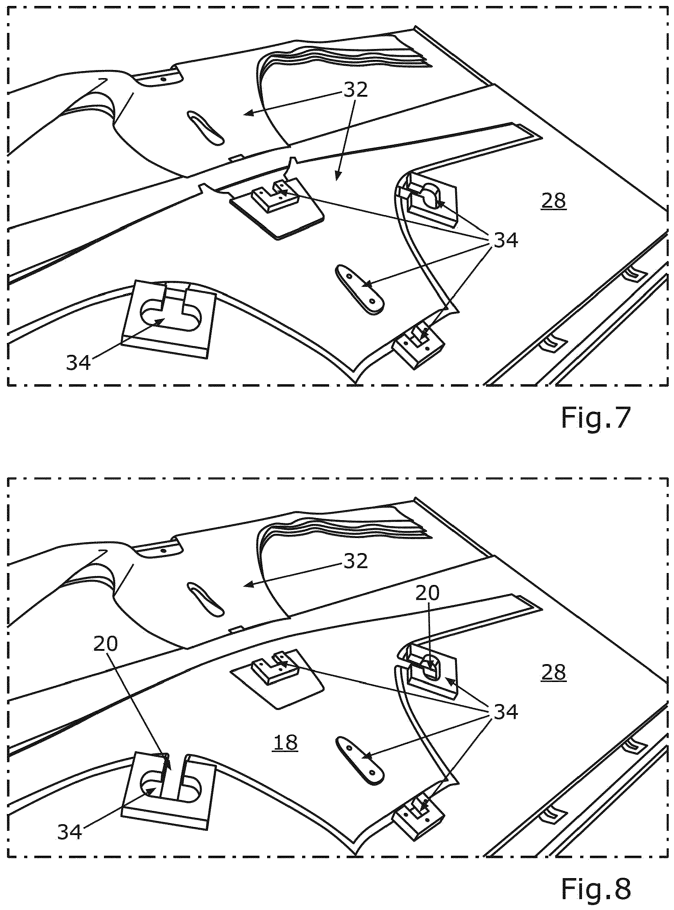

In Fig. 7 ist die zweite Schablone 28 in einer weiteren Perspektivansicht gezeigt, und zwar nachdem eine der aus Leder hergestellten Dekorschichten 32 in der Aussparung 30 der zweiten Schablone 28 positioniert wurde. Nachdem die Dekorschicht 32 bestimmungsgemäß innerhalb der zweiten Schablone 28 angeordnet wurde, kann im Bereich der hier nicht erkennbaren Aussparung 30 ein Unterdruck erzeugt werden, sodass die Dekorschicht 32 an die zweite Schablone 28 angesaugt wird.

In Fig. 8 ist die zweite Schablone 28 in einer weiteren Perspektivansicht gezeigt, wobei das Tablett 18 mitsamt dem daran anhaftenden und mit dem Schmelzklebstoff versehenden Abstandsgewirke 14 auf der in der Aussparung 30 der zweiten Schablone 28 angeordneten Dekorschicht 32 und in der Aussparung 30 positioniert wurde. Die laschenförmigen Positionierelemente 20 dienen dabei wiederum zur positionsgenauen und wunschgemäßen Ausrichtung und Anordnung des Tabletts 18 innerhalb der Aussparung 30 der zweiten Schablone 28. Dadurch, dass die Positionierelemente 34 der zweiten Schablone 28 genauso angeordnet sind wie die Positionierelemente 16 der ersten Schablone 10, wird das Tablett 18 zwangsläufig genauso zu den Positionierelementen 34 wie zu den Positionierelementen 16 ausgerichtet und angeordnet. Durch Druckausübung auf die Schablone 28 wird das mit dem Schmelzklebstoff versehende Abstandsgewirke 14 an eine Rückseite der Dekorschicht 32 angedrückt und haftet daran an.

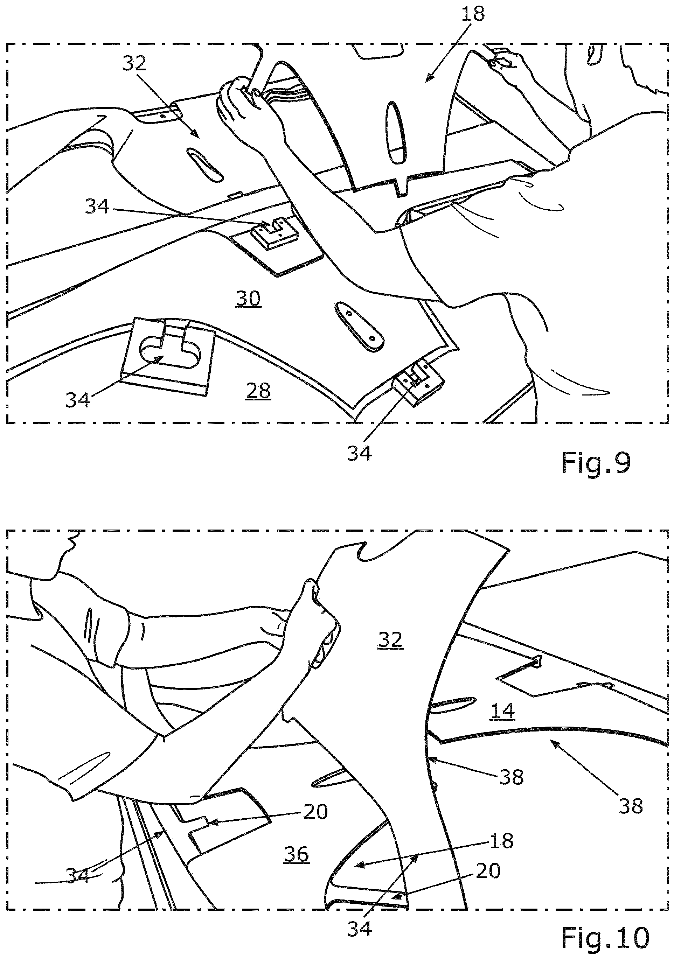

In Fig. 9 kann man erkennen, wie das Tablett 18 mitsamt dem aus den beiden Schichten, also dem Abstandsgewirke 14 und der Dekorschicht 32, hergestellten und hier nicht näher bezeichnete Verbund aus der zweiten Schablone 28 entnommen wird.

In Fig. 10 ist das Tablett 18 in einer Perspektivansicht zu erkennen, und zwar nachdem der besagte Verbund 38 aus dem Abstandsgewirke 14 und der Dekorschicht 32 von dem Tablett 18 entfernt wurde. Vorliegend ist ein doppelseitiges Klebeband 36 zu erkennen, welches auf das Tablett 18 aufgebracht wurde. Das doppelseitige Klebeband 36 dient als der zuvor bereits erwähnte Klebstoff, welcher dafür sorgt, dass das Abstandsgewirke 14 an dem Tablett 18 anhaftet, wenn dieses auf das Abstandsgewirke 14 gelegt bzw. gedrückt wird, nachdem dieses in die Aussparung 12 der ersten Schablone 10 gelegt wurde. Der Verbund 38, insbesondere das Abstandsgewirke 14, kann schadlos wieder von dem doppelseitigen Klebeband 36 abgezogen und somit von dem Tablett 18 entfernt werden. In der vorliegenden Darstellung ist noch ein weiterer Verbund 38 zu erkennen, welcher auf seiner hier nicht näher bezeichneten Dekorschicht 32 abgelegt wurde.

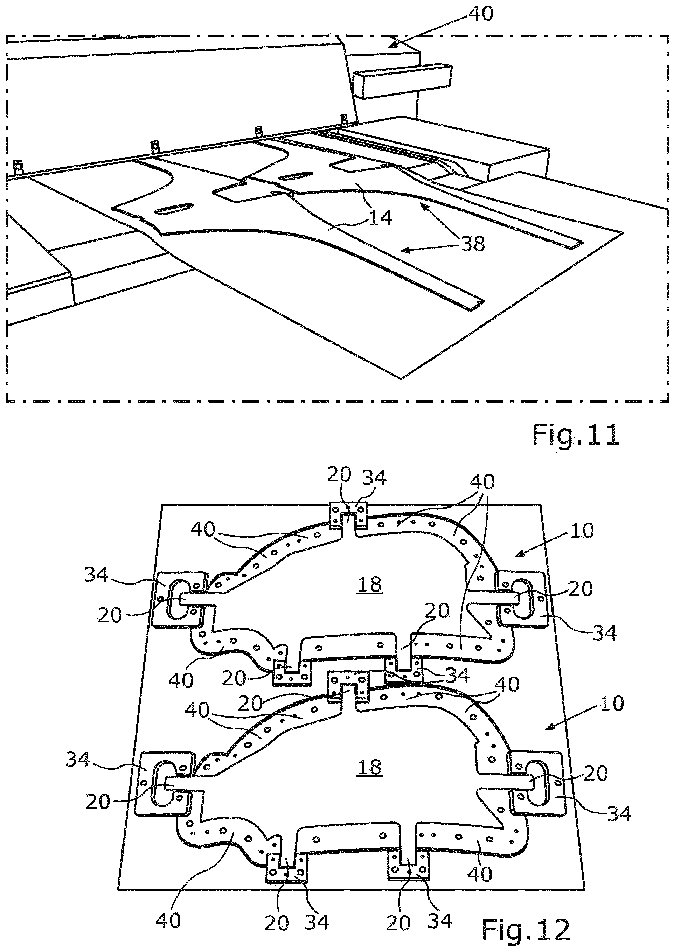

In Fig. 11 sind die beiden Verbünde 38 zu erkennen, und zwar während diese einer Flachbett-Kaschiermaschine 40 zugeführt werden. Mittels dieser Flachbett-Kaschiermaschine 40 werden unter Druck- und Hitzeeinwirkung die jeweiligen Abstandsgewirke 14 und die aus Leder hergestellten Dekorschichten 32 miteinander verbunden, weil der Schmelzklebstoff vernetzt und dadurch die beiden Schichten 14, 32 miteinander verbindet. Nach der Hitzeeinwirkung werden mittels der Flachbett-Kaschiermaschine 40 die Verbünde 38 abgekühlt, sodass zuverlässig verhindert werden kann, dass die jeweiligen Abstandsgewirke 14 und die jeweiligen Dekorschichten 32 noch zueinander verrutschen können.

In Fig. 12 ist eine weitere mögliche Ausführungsform der ersten Schablone 10 dargestellt. Die Schablone 10 weist vorliegend einen modularen Aufbau aus mehrere Segmentvarianten 42 auf, welche je nach Formgebung bzw. Kontur der Schichten, also der jeweiligen Abstandsgewirke 14 und der Dekorschichten 32, unterschiedlich konfiguriert und miteinander verschraubt werden können. Durch den segmentartigen Aufbau ist es auf einfache Weise möglich, auf Änderungen bei Zuschnitten der Schichten 14, 32 zu reagieren, was beispielsweise im Zuge einer Vorentwicklung durchaus öfter vorkommen kann. Genauso ist es beispielsweise möglich, bei sich ändernden Zuschnitten im Zuge eines Facelifts ohne die gesamte Schablone 10 austauschen zu müssen diese entsprechend anzupassen. Die zweite Schablone 28 kann ebenfalls aus derartigen Segmentvarianten 42 zusammengesetzt sein.

Die Schablonen 10, 28 und das Tablett 18 bildet gemeinsam also ein System zum Herstellen des als Verkleidung für ein Fahrzeuginterieurbauteil dienenden zweischichtigen Verbunds 38. Dadurch, dass die Aussparungen 12, 30 der Schablonen und das Tablett 18 hinsichtlich ihrer Formgebung aufeinander abgestimmt sind, können die beiden Schichten des Verbunds 38, also das Abstandsgewirke 14 und die aus Leder hergestellte Dekorschicht 32, ganz einfach passgenau zueinander ausgerichtet und aneinander befestigt werden. Der Einsatz der Schablonen und 10, 28 und des Tabletts 18 ist dabei nicht nur auf Abstandsgewirke 14 und aus Leder hergestellte Dekorschichten 32 beschränkt. Grundsätzlich können alle Arten von Schichten in der beschriebenen Weise unter Verwendung der Schablonen 10, 28 und des Tablette 18 zu derartigen Verbünden 38 hergestellt werden.

### BEZUGSZEICHENLISTE

- 10: erste Schablone
- 12: Aussparung der ersten Schablone
- 14: Abstandsgewirke
- 16: Positionierelemente der ersten Schablone 10
- 18: Tablett
- 20: Positionierelemente des Tabletts
- 22: Vorrichtung
- 24: vom Tablett abgewandte Seite des Abstandsgewirkes
- 26: Vorrichtung
- 28: zweite Schablone
- 30: Aussparung der zweiten Schablone
- 32: Dekorschicht
- 34: Positionierelemente der zweiten Schablone 28
- 36: doppelseitiges Klebeband am Tablett
- 38: Verbund aus Abstandsgewirke und Dekorschicht
- 40: Segmentvarianten

## Patentansprüche

1. Verfahren zum Herstellen eines als Verkleidung für ein Fahrzeuginterieurbauteil dienenden zumindest zweischichtigen Verbunds (38), umfassend die Schritte:
- Bereitstellen einer ersten Schablone (10) mit einer Aussparung (12) für eine erste Schicht (14) des Verbunds (38);
- Anordnen der ersten Schicht (14) in der Aussparung (12) der ersten Schablone (10);
- Anordnen eines mit einem Klebstoff versehenden Tabletts (18) auf der in der Aussparung (12) angeordneten ersten Schicht (14) und in der Aussparung (12) der ersten Schablone (10), infolgedessen die erste Schicht (14) am Tablett (18) anhaftet;
- Entnehmen des Tabletts (18) mitsamt der daran anhaftenden ersten Schicht (14) aus der Aussparung (12) der ersten Schablone (10) und Auftragen eines Klebstoffs auf einer vom Tablett (18) abgewandten Seite (24) der ersten Schicht (14);
- Bereitstellen einer zweiten Schablone (28) mit einer Aussparung (30) für eine zweite Schicht (32) des Verbunds (38);
- Anordnen der zweiten Schicht (32) in der Aussparung (30) der zweiten Schablone (28);
- Anordnen des Tabletts (18) mitsamt der daran anhaftenden und mit dem Klebstoff versehenen ersten Schicht (14) auf der in der Aussparung (30) der zweiten Schablone (28) angeordneten zweiten Schicht (32) und in der Aussparung (30) der zweiten Schablone (28);
- Entnehmen des Tabletts (18) mitsamt dem aus den beiden Schichten (14, 32) hergestellten Verbund (38) aus der zweiten Schablone (28), **dadurch gekennzeichnet, dass** die Schablonen (10, 28) jeweilige Positionierelemente (16, 34) aufweisen, in welche das Tablett (18) mit jeweiligen korrespondierenden Positionierelementen (20) eingesetzt und dadurch in einer bestimmungsgemäßen Position gegenüber den Schablonen (10, 28) zentriert wird.

2. Verfahren nach Anspruch 1,
**dadurch gekennzeichnet, dass**
die erste Schicht ein Abstandsgewirke (14) oder Schaumstoff ist.

3. Verfahren nach Anspruch 1 oder 2,
**dadurch gekennzeichnet, dass**
die zweite Schicht (32) aus Leder hergestellt wird.

4. Verfahren nach einem der vorhergehenden Ansprüche,
**dadurch gekennzeichnet, dass**
zumindest eine der Schablonen (10, 28) einen modularen Aufbau aus mehreren Segmentvarianten (40) aufweist und angepasst an eine Form der betreffenden Schicht (14, 32) aus einer Auswahl der Segmentvarianten (40) zusammengesetzt wird.

5. Verfahren nach Anspruch 4,
**dadurch gekennzeichnet, dass**
die Segmentvarianten (40) miteinander verschraubt werden.

6. Verfahren nach einem der vorhergehenden Ansprüche,
**dadurch gekennzeichnet, dass**
das Tablett (18) mit einem doppelseitigen Klebeband (36) versehen wird, an welchem die erste Schicht (14) anhaftet.

7. Verfahren nach einem der vorhergehenden Ansprüche,
**dadurch gekennzeichnet, dass**
zumindest eine der Schablonen (10, 28) aus Polyoxymethylen hergestellt wird.

8. Verfahren nach einem der vorhergehenden Ansprüche,
**dadurch gekennzeichnet, dass**
das Tablett (18) aus glasfaserverstärktem Kunststoff hergestellt wird.

9. Verfahren nach einem der vorhergehenden Ansprüche,
**dadurch gekennzeichnet, dass**
als der Klebstoff ein Schmelzklebstoff auf der ersten Schicht (14) aufgetragen wird.

10. Verfahren nach einem der vorhergehenden Ansprüche,
**dadurch gekennzeichnet, dass**
die zweite Schicht (32) mittels Unterdruck an die zweite Schablone (28) angesaugt wird.

11. Verfahren nach einem der vorhergehenden Ansprüche,
**dadurch gekennzeichnet, dass**
die zweite Schicht (32) ein wenig kleiner als die Aussparung (30) der zweiten Schablone (28) zugeschnitten wird.

12. Verfahren nach einem der vorhergehenden Ansprüche,
**dadurch gekennzeichnet, dass**
der Verbund (38) nach der Entnahme aus der zweiten Schablone (28) von dem Tablett (18) entfernt und unter Druck- und Hitzeeinwirkung die Schichten (14, 32) irreversibel miteinander verbunden werden.

13. Verfahren nach Anspruch 12,
**dadurch gekennzeichnet, dass**
nach der Hitzeeinwirkung die Schichten (14, 32) abgekühlt werden.

14. System zum Herstellen eines als Verkleidung für ein Fahrzeuginterieurbauteil dienenden zumindest zweischichtigen Verbunds (38), umfassend
- eine erste Schablone (10) mit einer Aussparung (12) für eine erste Schicht (14) des Verbunds (38);
- ein Tablett (18);
- eine zweite Schablone (28) mit einer Aussparung (30) für eine zweite Schicht (32) des Verbunds (38), wobei die Schablonen (10, 28) und das Tablett (18) so geformt sind, dass das Tablett (18) jeweils nur in einer bestimmten Anordnung in die Aussparungen (12, 30) passt und die Schablonen (10, 28) jeweilige Positionierelemente (16, 34) aufweisen, in welche das Tablett (18) mit jeweiligen korrespondierenden Positionierelementen (20) eingesetzt und dadurch in einer bestimmungsgemäßen Position gegenüber den Schablonen (10, 28) zentriert wird.

## Claims

1. Method for producing an at least two-layered composite (38) serving as cladding for a vehicle interior component, comprising the following steps:
- providing a first template (10) having a cutout (12) for a first layer (14) of the composite (38) ;
- arranging the first layer (14) in the cutout (12) of the first template (10);
- arranging a tablet (18) provided with an adhesive on the first layer (14) arranged in the cutout (12) and in the cutout (12) of the first template (10), as a result of which the first layer (14) adheres to the tablet (18);
- removing the tablet (18), together with the first layer (14) adhering thereto, from the cutout (12) of the first template (10) and applying an adhesive to a side (24) of the first layer (14) that faces away from the tablet (18);
- providing a second template (28) having a cutout (30) for a second layer (32) of the composite (38) ;
- arranging the second layer (32) in the cutout (30) of the second template (28);
- arranging the tablet (18), together with the first layer (14) adhering thereto and provided with the adhesive, on the second layer (32) arranged in the cutout (30) of the second template (28) and in the cutout (30) of the second template (28);
- removing the tablet (18), together with the composite (38) produced from the two layers (14, 32), from the second template (28), **characterized in that** the templates (10, 28) have respective positioning elements (16, 34) in which the tablet (18) with respective corresponding positioning elements (20) is inserted and as a result is centred in a position as intended in relation to the templates (10, 28).

2. Method according to Claim 1,
**characterized in that**
the first layer is a spacer fabric (14) or foam.

3. Method according to Claim 1 or 2,
**characterized in that**
the first layer (32) is produced from leather.

4. Method according to one of the preceding claims,
**characterized in that**
at least one of the templates (10, 28) has a modular structure of multiple segment variants (40) and is composed from a selection of the segment variants (40) in a manner adapted to the shape of the relevant layer (14, 32) .

5. Method according to Claim 4,
**characterized in that**
the segment variants (40) are screwed to one another.

6. Method according to one of the preceding claims,
**characterized in that**
the tablet (18) is provided with a two-sided adhesive tape (36) to which the first layer (14) adheres.

7. Method according to one of the preceding claims,
**characterized in that**
at least one of the templates (10, 28) is produced from polyoxymethylene.

8. Method according to one of the preceding claims,
**characterized in that**
the tablet (18) is produced from glass-fibre-reinforced plastic.

9. Method according to one of the preceding claims,
**characterized in that**
a hotmelt adhesive is applied to the first layer (14) as the adhesive.

10. Method according to one of the preceding claims,
**characterized in that**
the second layer (32) is sucked onto the second template (28) by means of negative pressure.

11. Method according to one of the preceding claims,
**characterized in that**
the second layer (32) is cut to a slightly smaller size than the cutout (30) of the second template (28) .

12. Method according to one of the preceding claims,
**characterized in that**
the composite (38), after removal from the second template (28), is removed from the tablet (18) and the layers (14, 32) are irreversibly connected to one another under the action of pressure and heat.

13. Method according to Claim 12,
**characterized in that**
the layers (14, 32) are cooled after the action of heat.

14. System for producing an at least two-layered composite (38) serving as cladding for a vehicle interior component, said system comprising
- a first template (10) having a cutout (12) for a first layer (14) of the composite (38);
- a tablet (18);
- a second template (28) having a cutout (30) for a second layer (32) of the composite (38), wherein the templates (10, 28) and the tablet (18) are shaped such that the tablet (18) fits into the cutouts (12, 30) respectively only in one determined arrangement, and the templates (10, 28) have respective positioning elements (16, 34) in which the tablet (18) with respective corresponding positioning elements (20) is inserted and as a result is centred in a position as intended in relation to the templates (10, 28).

## Revendications

1. Procédé de production d'un composite (38) à au moins deux couches servant à l'habillage pour une pièce d'intérieur de véhicule, comprenant les étapes de :
- fourniture d'un premier gabarit (10) pourvu d'un évidement (12) pour une première couche (14) du composite (38) ;
- agencement de la première couche (14) dans l'évidement (12) du premier gabarit (10) ;
- agencement d'une tablette (18) pourvue d'un adhésif sur la première couche (14) agencée dans l'évidement (12), et dans l'évidement (12) du premier gabarit (10), en conséquence de quoi la première couche (14) adhère à la tablette (18) ;
- retrait de la tablette (18), avec la première couche (14) adhérant sur celle-ci, hors de l'évidement (12) du premier gabarit (10) et application d'un adhésif sur un côté (24) de la première couche (14) opposé à la tablette (18) ;
- fourniture d'un deuxième gabarit (28) pourvu d'un évidement (30) pour une deuxième couche (32) du composite (38) ;
- agencement de la deuxième couche (32) dans l'évidement (30) du deuxième gabarit (28) ;
- agencement de la tablette (18), avec la première couche (14) adhérant sur celle-ci et pourvue de l'adhésif, sur la deuxième couche (32) agencée dans l'évidement (30) du deuxième gabarit (28), et dans l'évidement (30) du deuxième gabarit (28) ;
- retrait de la tablette (18), avec le composite (38) produit à partir des deux couches (14, 32), hors du deuxième gabarit (28), **caractérisé en ce que** les gabarits (10, 28) présentent des éléments de positionnement (16, 34) respectifs, dans lesquels la tablette (18) est insérée par des éléments de positionnement (20) correspondants respectifs et est ainsi centrée dans une position correcte par rapport aux gabarits (10, 28).

2. Procédé selon la revendication 1,
**caractérisé en ce que**
la première couche est un maillage d'espacement (14) ou une mousse synthétique.

3. Procédé selon la revendication 1 ou 2,
**caractérisé en ce que**
la deuxième couche (32) est produite à partir de cuir.

4. Procédé selon l'une des revendications précédentes,
**caractérisé en ce**
**qu'**au moins l'un des gabarits (10, 28) présente une conception modulaire constituée de plusieurs variantes de segments (40) et est assemblé à partir d'une sélection de variantes de segments (40), de manière adaptée à une forme de la couche (14, 32) concernée.

5. Procédé selon la revendication 4,
**caractérisé en ce que**
les variantes de segments (40) sont vissées les unes aux autres.

6. Procédé selon l'une des revendications précédentes,
**caractérisé en ce que**
la tablette (18) est pourvue d'une bande adhésive (36) double face à laquelle la première couche (14) adhère.

7. Procédé selon l'une des revendications précédentes,
**caractérisé en ce**
**qu'**au moins l'un des gabarits (10, 28) est produit à partir de polyoxyméthylène.

8. Procédé selon l'une des revendications précédentes,
**caractérisé en ce que**
la tablette (18) est produite à partir de matière synthétique renforcée par des fibres de verre.

9. Procédé selon l'une des revendications précédentes,
**caractérisé en ce**
**qu'**en tant qu'adhésif, un adhésif thermofusible est appliqué sur la première couche (14).

10. Procédé selon l'une des revendications précédentes,
**caractérisé en ce que**
la deuxième couche (32) est aspirée sur le deuxième gabarit (28) par dépression.

11. Procédé selon l'une des revendications précédentes,
**caractérisé en ce que**
la deuxième couche (32) est découpée de manière un peu plus petite que l'évidement (30) du deuxième gabarit (28) .

12. Procédé selon l'une des revendications précédentes,
**caractérisé en ce**
**qu'**après le retrait hors du deuxième gabarit (28), le composite (38) est enlevé de la tablette (18) et les couches (14, 32) sont reliées l'une à l'autre de manière irréversible sous l'action de la pression et de la chaleur.

13. Procédé selon la revendication 12,
**caractérisé en ce**
**qu'**après l'action de la chaleur, les couches (14, 32) sont refroidies.

14. Système de production d'un composite (38) à au moins deux couches servant à l'habillage pour une pièce d'intérieur de véhicule, comprenant
- un premier gabarit (10) pourvu d'un évidement (12) pour une première couche (14) du composite (38) ;
- une tablette (18) ;
- un deuxième gabarit (28) pourvu d'un évidement (30) pour une deuxième couche (32) du composite (38), les gabarits (10, 28) et la tablette (18) étant formés de telle sorte que la tablette (18) ne s'adapte respectivement dans les évidements (12, 30) que seulement dans un agencement déterminé et les gabarits (10, 28) présentent des éléments de positionnement (16, 34) respectifs, dans lesquels la tablette (18) est insérée par des éléments de positionnement (20) correspondants respectifs et est ainsi centrée dans une position correcte par rapport aux gabarits (10, 28).
